# EUROPÄISCHE PATENTSCHRIFT

(11) **EP 0 977 960 B1**
(45) Veröffentlichungstag und Bekanntmachung des Hinweises auf die Patenterteilung: **06.09.2000**
(21) Anmeldenummer: 98959860.2
(22) Anmeldetag: 07.11.1998
(51) Int. Cl.: F16L 3/223, F16L 3/13

(54) **ROHRHALTER MIT SCHWINGUNGSDÄMPFUNG**
VIBRATION-DAMPENED TUBE HOLDER
DISPOSITIF DE FIXATION AMORTISSEUR POUR TUYAUX

(30) Priorität: 27.11.1997 DE 19752525
(43) Veröffentlichungstag der Anmeldung: 09.02.2000
(73) Patentinhaber: A. Raymond & Cie, 38028 Grenoble (FR)
(72) Erfinder: CHIORBOLI, Gianni, I-Santhià (IT)
(74) Vertreter: Kirchgaesser, Johannes, Dipl.-Ing.
(86) Internationale Anmeldenummer: EP9807117
(87) Internationale Veröffentlichungsnummer: WO9928663

(56) Entgegenhaltungen:
- EP-A2- 0 440 270
- DE-A1- 3 610 829
- DE-C1- 4 406 574
- US-A- 4 881 705
- US-A- 5 613 655
- US-A- 5 653 411

## Beschreibung

Die Erfindung bezieht sich auf ein Befestigungselement zur schwingungsdämpfenden Halterung von Rohrleitungen, insbesondere von Flüssigkeitsleitungen in Kraftfahrzeugen, wie z.B. die Bremsleitungen oder Leitungen für die Servolenkung oder Klimaanlage.

Das Befestigungselement besteht hierbei aus einem auf einer Trägerplatte-beispielsweise einem Karosserieblech - verankerbaren Grundkörper aus hartelastischem Kunststoff mit einer Bodenplatte und an dieser U-förmig angeformten Seitenwänden sowie einer den Rohrleitungsumfang um mehr als die Hälfte umgreifenden Halteschale. Diese ist im Bereich ihrer Enden über zwei schräg nach oben gerichtete Stege mit den Seitenwänden einstückig verbunden und dadurch schwingfähig aufgehängt, so daß die von den Rohrleitungen beim Durchfluß von Steuerflüssigkeiten ausgehenden Schwingungen gedämpft und somit nicht an die Karosserie weitergeleitet werden.

Die Halteschalen sind hierbei so dimensioniert, daß sich die Rohrleitungen leicht von oben in die Öffnung einführen und in die Halteposition niederdrücken lassen. Desweiteren ist der Anpreßdruck der Halteschale durch entsprechende Ausbildung der Halteschale so eingestellt, daß sich die Rohrleitungen zur richtigen Positionierung nach dem Eindrücken leicht in axialer Richtung verschieben lassen. Nach dem Positionieren der Rohrleitungen sollten diese dann aber im Rohrhalter unverschiebbar festgelegt werden, was mit den in der Praxis verwendeten Rohrhaltern nicht ohne weiteres möglich ist.

Aufgabe der Erfindung ist es, den vorgenannten Rohrhalter so zu gestalten, daß nach dem Ausrichten eine axiale Festlegung bei gleichzeitiger Beibehaltung der Dämpfungseigenschaften ermöglicht wird. Diese Aufgabe wird nach der vorliegenden Erfindung bei einem gattungsgemäßen Befestigungselement dadurch gelöst, daß am oberen Ende der einen Seitenwand ein Verschlußbügel schwenkbar angeformt ist, welcher an seinem freien Ende einen etwa rechtwinklig abstehenden Raststeg mit einer nach außen abstehenden Rastkante aufweist, welche mit einer an der gegenüberliegenden Seitenwand angeformten, nach innen gerichteten Gegenrastkante zusammenwirkt, wobei der Raststeg an dem Verschlußbügel von dem Schwenkscharnier der erstgenannten Seitenwand in einem Abstand ( a ) angeformt ist, welcher im geöffneten Zustand des Bügels etwas kleiner ist als der Abstand ( b ) des Schwenkscharniers vom oberen Wandbereich der anderen Seitenwand.

Der erfindungsgemäß vorgesehene Verschlußbügel ist in Bezug auf die Seitenwände so geformt, daß er im Anlieferungszustand in Verlängerung der einen Seitenwand hochgerichtet ist und damit die Öffnung in die Halteschale freigibt. Im Schließzustand drückt der Raststeg von außen gegen den oberen Rand der gegenüberliegenden Seitenwand und zieht diese praktisch in Richtung auf die erstgenannte Seitenwand. Dadurch werden die Haltestege in Richtung auf die Halteschale gedrückt, welche wiederum fester an die Außenwand der Rohrleitung gedrückt wird. Damit erhöht sich der Anpreßdruck derart, daß sich die Rohrleitung praktisch nicht mehr verschieben läßt.

In den Figuren ist ein Ausführungsbeispiel der Erfindung dargestellt und soll nachfolgend näher erläutert werden. Es zeigt
- Fig. 1: einen erfindungsgemäßen Rohrhalter mit zwei Rohraufnahmeschalen und hochgerichteten Verschlußbügeln in Seitenansicht,
- Fig. 2: den gleichen Rohrhalter in perspektivischer Darstellung,
- Fig. 3: den Rohrhalter in Seitenansicht beim Eindrücken der Rohrleitungen und
- Fig. 4: den gleichen Rohrhalter nach dem Eindrücken der Rohrleitungen und Einrasten des Verschlußbügels.

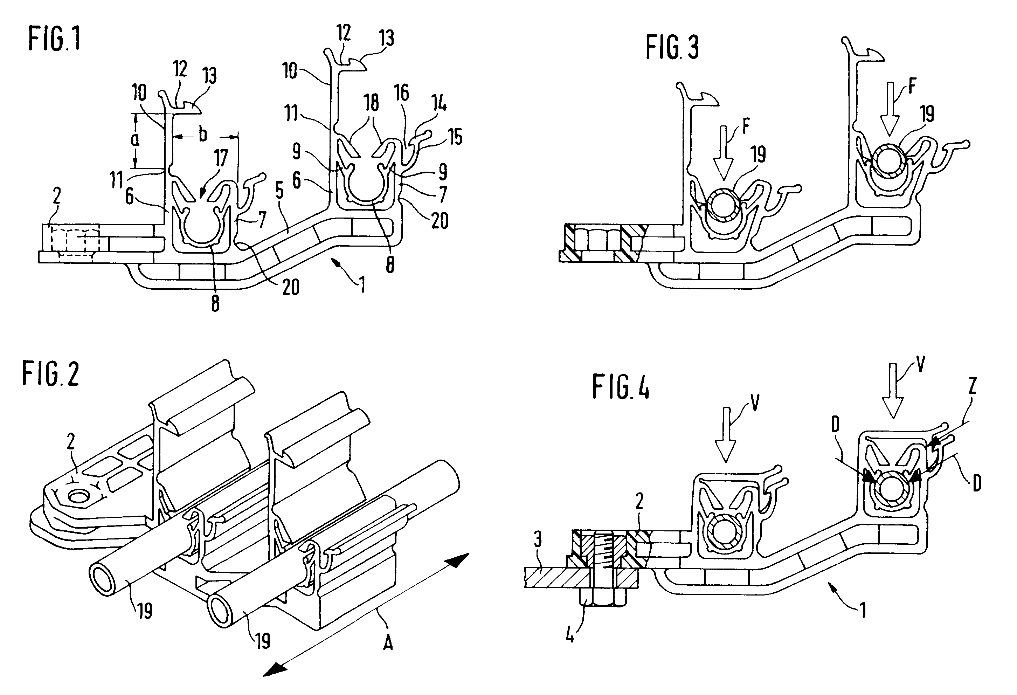

Das in den Figuren dargestellte Befestigungselement besteht aus einem Grundkörper 1 aus hartelastischem Kunststoff, welcher mit einer seitlich abstehenden Montageplatte 2 auf einer Trägerplatte 3 mittels einer Schraube 4 verankerbar ist ( Figur 4 ).

Der Grundkörper 1 besitzt an seiner Oberseite eine Bodenplatte 5, auf der zwei Paare von Seitenwänden 6 und 7 U-förmig angeformt sind. Zwischen je zwei Seitenwänden 6 und 7 befindet sich eine Halteschale 8, welche zur Aufnahme einer Rohrleitung 19 bestimmt ist und den Rohrleitungsumfang um etwas mehr als die Hälfte umgreift. Die Halteschale 8 ist im Bereich ihrer beiden Enden über zwei schräg nach oben gerichtete Stege 9 mit den Seitenwänden 6 und 7 einstückig verbunden und dadurch schwingfähig aufgehängt.

An der in der Zeichnung jeweils links dargestellten Seitenwand 6 ist am oberen Ende ein Verschlußbügel 10 über ein durch eine Wandschwächung erzeugtes Scharnier 11 schwenkbar angeformt, und zwar derart, daß dieser im Anlieferungszustand in gerader Verlängerung der Seitenwand 6 hochsteht. Der Verschlußbügel 10 weist an seinem freien Ende einen rechtwinklig abstehenden Raststeg 12 mit einer vom Schwenkscharnier 11 wegweisenden Rastkante 13 auf. Diese wirkt mit einer an der gegenüberliegenden Seitenwand 7 außen angeformten Gegenrastkante 14 zusammen, welche am oberen Rand eines Haltelappens 15 angeformt ist. Dieser ist seinerseits an der Außenseite der Seitenwand 7 angeformt, und zwar in solchem Abstand unterhalb der Oberkante, daß der Raststeg 12 des Verschlußbügels 10 in der sich unterhalb der Rastkante 14 ergebenden Nische 16 versenkbar ist.

An beiden Seitenwänden 6 und 7 sind jeweils oberhalb der Halteschale 8 schräg in die Öffnung 17 weisende Einführstege 18 angeformt, durch welche die Rohrleitungen 19 sicher in die Halteschalen 8 einführbar sind. Außerdem ist jeweils eine der beiden Seitenwände - im vorliegenden Ausführungsbeispiel die jeweils rechts dargestellte Seitenwand 7 - dicht über der Anformstelle an der Bodenplatte 5 mit einer sich über die ganze Wandbreite erstreckenden Rille bzw. Einschnürung 20 versehen, welche die Seitenwand 7 an dieser Stelle bevorzugt biegsam macht. Diese biegsame Wandeinschnürung 20 erleichtert das Eindrücken der Rohrleitungen 19 in die Halteschalen 8 ( Pfeilrichtung F ) dadurch, daß die Seitenwand 7 sich leicht nach außen biegen läßt.

Der Raststeg 12 ist an dem Verschlußbügel 10 in einem Abstand a von dem Schwenkscharnier 11 der linken Seitenwand 6 angeformt. Dieser Abstand a ist im geöffneten Zustand des Verschlußbügels 10 etwas kleiner als der Abstand b des Schwenkscharniers 11 vom oberen Wandbereich der rechten Seitenwand 7. Dadurch wird sichergestellt, daß beim Niederdrücken des Verschlußbügels 10 in Pfeilrichtung V und Einrasten der Rastkante 13 unterhalb der Gegenrastkante 14 der obere Rand der gegenüberliegenden Seitenwand 7 vom Raststeg 12 um einen kleinen Betrag in Richtung des Pfeiles Z auf die linke Seitenwand 6 gezogen und die Halteschale 8 über die Stege 9 in Richtung der Pfeile D fest gegen die Rohrleitung 19 gedrückt wird.

Während die Rohrleitungen 19 vor dem Niederdrücken des Verschlußbügels 10 sich leicht in den Halteschalen 8 in axialer Richtung gemäß Pfeil A verschieben lassen, sind diese nach dem Niederdrücken des Bügels 10 und Einrasten der Rastkante 13 ( Figur 4 ) derart fest eingeklemmt, daß sich die Rohrleitungen 19 praktisch nicht mehr verschieben lassen, aber trotzdem noch schwingfähig gehalten werden.

## Patentansprüche

1. Befestigungselement zur schwingungsdämpfenden Halterung von Rohrleitungen, insbesondere von Flüssigkeitsleitungen in Kraftfahrzeugen, bestehend aus einem auf einer Trägerplatte verankerbaren Grundkörper aus hartelastischem Kunststoff mit einer Bodenplatte ( 5 ) und auf dieser U-förmig angeformten Seitenwänden ( 6 u. 7 ) sowie einer den Rohrleitungsumfang um mehr als die Hälfte umgreifenden Halteschale ( 8 ), die im Bereich ihrer Enden über zwei schräg nach oben gerichtete Stege ( 9 ) mit den Seitenwänden einstückig verbunden sind, **dadurch gekennzeichnet,** daß am oberen Ende der einen Seitenwand ( 6 ) ein Verschlußbügel ( 10 ) schwenkbar angeformt ist, welcher an seinem freien Ende einen etwa rechtwinklig abstehenden Raststeg ( 12 ) mit einer vom Schwenkpunkt wegweisenden Rastkante ( 13 ) aufweist, welche mit einer an der gegenüberliegenden Seitenwand ( 7 ) außen angeformten, nach innen gerichteten Gegenrastkante ( 14 ) zusammenwirkt, wobei der Raststeg ( 12 ) an dem Verschlußbügel ( 10 ) von dem Schwenkscharnier ( 11 ) der erstgenannten Seitenwand ( 6 ) in einem Abstand ( a ) angeformt ist, welcher im geöffneten Zustand des Verschlußbügels ( 10 ) etwas kleiner ist als der Abstand ( b ) des Schwenkscharniers ( 11 ) vom oberen Wandbereich der anderen Seitenwand ( 7 ).

2. Befestigungselement nach Anspruch 1, dadurch gekennzeichnet, daß eine der beiden Seitenwände ( 6) oder ( 7 ) dicht über der Anformstelle mit einer sich über die ganze Wandbreite erstreckenden, bevorzugt biegsamen Wandeinschnürung ( 20) versehen ist.

3. Befestigungselement nach einem der Ansprüche 1 bis 3, dadurch gekennzeichnet, daß an beiden Seitenwänden ( 6 u. 7 ) oberhalb der Halteschale ( 8 ) schräg in deren Öffnung ( 17) weisende Einführstege ( 18 ) angeformt sind.

4. Befestigungselement nach Ansprüche 1 oder 2, dadurch gekennzeichnet, daß die Gegenrastkante ( 14 ) den oberen Rand eines Haltelappens ( 15 ) bildet, welcher an der Außenseite der Seitenwand ( 7 ) in solchem Abstand unterhalb der Oberkante angeformt ist, daß die Rastkante ( 13) des Verschlußbügels ( 10) in der sich unterhalb der Rastkante ( 14) ergebenden Nische ( 16) versenkbar ist.

## Claims

1. A fixing element for vibration-dampingly holding conduits, in particular fluid lines in motor vehicles, comprising a main body which can be anchored on a carrier plate, the main body comprising hard-elastic plastics material having a bottom plate (5) and side walls (6 and 7) which are formed thereon in a U-shape and a holding cup (8) embracing the periphery of the conduit around more than half thereof, which in the region of the ends thereof are integrally connected to the side walls by way of two inclinedly upwardly directed limbs (9), characterised in that formed pivotably on the upper end of the one side wall (6) is a closure clip (10) which at its free end has a retaining limb (12) projecting approximately at a right angle and having a retaining edge (13) which faces away from the pivot point and which co-operates with an inwardly directed counterpart retaining edge (14) formed on the oppositely disposed side wall (7) on the outside thereof, wherein the retaining limb (12) is formed on the closure clip (10) at a spacing (a) from the pivot hinge (11) of the first-mentioned side wall (6), which spacing (a) in the opened condition of the closure clip (10) is somewhat smaller than the spacing (b) of the pivot hinge (11) from the upper wall region of the other side wall (7).

2. A fixing element according to claim 1 characterised in that one of the two side walls (6) or (7) is provided closely above the formed-on location thereof with a preferably flexible wall constriction (20) which extends over the entire width of the wall.

3. A fixing element according to one of claims 1 and 2 characterised in that formed on both side walls (6 and 7) above the holding cup (8) are insertion limbs (18) which face inclinedly into its opening (17).

4. A fixing element according to claim 1 or claim 2 characterised in that the counterpart retaining edge (14) forms the upper edge of a holding tongue (15) which is formed on the outside of the side wall (7) at such a spacing beneath the upper edge that the retaining edge (13) of the closure clip (10) can be sunk in the recess (16) provided beneath the retaining edge (14).

## Revendications

1. Organe de fixation destiné à assurer le maintien en position de canalisations, notamment de conduites de liquide équipant les véhicules automobiles, tout en absorbant les vibrations, se composant d'un élément de base en matière plastique à cédage élastique dur, ancré dans une plaque support, comprenant une plaque de base (5) munie de parois latérales (6 et 7), réalisées solidaires de celle-ci par moulage suivant une configuration en forme de U, ainsi qu'une coquille de retenue (8) enserrant la périphérie d'une canalisation sur plus de la moitié de celle-ci, qui, au niveau de ses extrémités, est rendue solidaire, par l'intermédiaire de deux barrettes entretoises (9) orientées obliquement vers le haut, des parois latérales, caractérisé en ce qu'un étrier de fermeture (10) est réalisé solidaire par moulage, selon une disposition articulée, de l'extrémité supérieure d'une paroi latérale (6), étrier qui comporte, au niveau de son extrémité libre, un ergot d'accrochage (12) faisant saillie en angle droit, muni d'une arête d'accrochage (13) s'écartant du centre de gravité, qui opère en interaction d'encastrement avec une arête d'accrochage antagoniste (14) orientée vers l'intérieur, qui est réalisée solidaire par moulage de la face extérieure de la paroi latérale (7) opposée, l'ergot d'accrochage (12) étant en l'occurrence réalisé solidaire par moulage de l'étrier de fermeture (10), par l'intermédiaire de la partie formant articulation de pivotement (11) de la paroi latérale (6) citée en premier, à une distance (a) qui, lorsque l'étrier de fermeture (10) est en position ouverte, est légèrement plus petite que l'intervalle d'écartement (b) entre l'articulation de pivotement (11) et la portion supérieure de l'autre paroi latérale (7).

2. Organe de fixation selon la revendication 1, caractérisé en ce que l'une des deux parois latérales (6) ou (7) comporte, juste au-dessus de l'endroit où elle prend naissance, un amincissement (20), de préférence flexible, qui intéresse toute la largeur de la paroi.

3. Organe de fixation selon l'une des revendications 1 à 3, caractérisé en ce que des ergots d'introduction (18), orientés de manière oblique en direction de l'ouverture (17), sont réalisés solidaires par moulage des deux parois latérales (6 et 7), au-dessus de la coquille de retenue (8).

4. Organe de fixation selon la revendication 1 ou 2, caractérisé en ce que l'arête d'accrochage antagoniste (14) forme le bord supérieur d'une languette de retenue (15), qui est réalisée solidaire par moulage de la face extérieure de la paroi latérale (7) à un intervalle en-dessous du bord supérieur tel que l'arête d'accrochage (13) de l'étrier de fermeture (10) peut être engagé dans l'alvéole (16) existant sous l'arête d'accrochage (14).
